# EUROPEAN PATENT APPLICATION

(11) **EP 3 598 364 A1**
(43) Date of publication of application: **22.01.2020**
(21) Application number: 18183996.0
(22) Date of filing: 17.07.2018
(51) Int. Cl.: G06Q 20/02, G06Q 20/40

(54) **TIMING CONSTRAINT FOR TRANSACTIONS OF A DISTRIBUTED DATABASE SYSTEM**

(71) Applicant: Siemens Aktiengesellschaft, 80333 München (DE)
(72) Inventor: Falk, Rainer, 85586 Poing (DE)

(57) **Abstract**

It is an object to provide for techniques of reliably inserting transactions into a distributed database system such as a blockchain. According to examples, the insertion of at least one transaction of the plurality of transactions is prioritized based on one or more timing constraints of at least some of the plurality of transactions. For example, one or more of the transactions can be discarded.

## Description

### TECHNICAL FIELD

Various embodiments generally relate to timing constraints for insertion of transactions into a distributed database system, such as a blockchain.

### BACKGROUND OF THE INVENTION

The technology of blockchains and "distributed ledgers" is currently widely discussed. Blockchains and distributed ledgers can be generally implemented as distributed database systems (DBSs). There are various use cases for DBSs including decentralized payment systems - such as cryptocurrencies including bitcoin - and novel tools for the financial industry. For example, it is possible to implement transactions between companies without intermediary agents or clearing in a protected manner. This facilitates novel business models not relying on a trusted intermediate agent. Costs per transaction are reduced. It is possible to flexibly offer new digital services without the need of having to set up a dedicated infrastructure and trust relationships.

Industrial applications such as industrial automated systems have specific requirements such as safety, in particular functional safety, availability (limited downtime), support of real-time transactions, long-term operation. It has been found that conventional implementations of blockchains do not fulfill or only fulfill to a limited degree such requirements.

For example, Andreas M. Antonopoulos "Mastering Bitcoin" O'Reilly (2010), First edition discloses at section "Transaction Age, Fees, and Priority" of Chapter 8: Mining and Consensus that a bitcoin node selects a priority metric to each transaction and adds the highest priority transactions first. Transactions are prioritized based on the "age" of the unspent transaction output, UTXO, that is being spent in their inputs, allowing for old and high-value inputs to be prioritized over newer and smaller inputs. Such techniques face the restriction that the prioritization is based on an input age and thus is static.

Documents US 8,531,247 B2, US 8,892,616 B2, US 8,300,811 B2, US 9,147,088 B2, US 9584311 B2, EP 2976707 B1, EP 2 605 445 B1, EP 2 870 565 A1, EP 2 891 102 A1, WO 2017137256 A1, EP 2870565 B1, EP 3028140 B1, EP 17175275 and US 8 843 761 B2 are known.

### SUMMARY

Therefore, a need exists for advanced techniques of DBSs such as blockchains. Specifically, a need exists for techniques of insertion of transactions into DBSs which overcome or mitigate at least some of the above-identified drawbacks or restrictions of reference implementations of DBSs.

This need is met by the features of the independent claims. The features of the dependent claims define embodiments.

According to an aspect, a device includes a receive module. The receive module is configured to receive a plurality of transactions for insertion into a DBS. The device also includes a retrieve module which is configured to retrieve, for at least some transactions of the plurality of transactions, control information from the respective transaction which is indicative of a timing constraint of the insertion of the respective transaction into the DBS. Also, the device includes a prioritize module that is configured to prioritize the insertion of at least one transaction of the at least some transactions into the DBS in accordance with the respective timing constraint.

According to an aspect, a method includes receiving a plurality of transactions for insertion into a DBS. The method also includes retrieving, for at least some transactions of the plurality of transactions, control information from the respective transaction, the control information being indicative of a timing constraint of the insertion of the respective transaction into the DBS. The method also includes prioritizing the insertion of at least one transaction of the at least some transactions into the DBS in accordance with the respective timing constraint.

A computer program or computer program product includes program code that can be executed by at least one processor. Executing the program code causes the at least one processor to perform a method. The method includes receiving a plurality of transactions for insertion into a DBS. The method also includes retrieving, for at least some transactions of the plurality of transactions, control information from the respective transaction, the control information being indicative of a timing constraint of the insertion of the respective transaction into the DBS. The method also includes prioritizing the insertion of at least one transaction of the at least some transactions into the DBS in accordance with the respective timing constraint.

Unless explicitly stated otherwise the terms "perform", "calculate", "computer-implemented", "calculate", "establish", "generate", "configure", "reconstruct" and the like preferably relate to actions and/or processes and/or processing steps which modify data and/or which generate data and/or which transform data in other data. Data can be represented by physical quantities or be present as physical quantities, e.g., as electrical pulses. In particular, the term "computer" should be interpreted broadly to cover all electronic devices having data processing capabilities. Computers can, thus, be implemented by personal computers, servers, memory programmable controllers, handheld computer systems, pocket PC devices, wireless communication devices and other communication devices that can process data, processors and other electronic devices for processing data.

In the context of the present disclosure "computer-implemented" can relate to an implementation of a method in which a processor performs at least one method step.

A processor in the context of the present disclosure can be a machine or electronic circuit. A processor can be specifically implemented by a central processing unit (CPU) or a microprocessor or a microcontroller, e.g., an application-specific integrated circuit (ASIC) or a digital signal processor, possibly in combination with a memory unit for storing program code, etc. A processor can alternatively or additionally be implemented by an integrated circuit (IC), specifically a field programmable gate array (FPGA), an ASIC or a digital signal processor (DSP) or a graphic processing unit (GPU). Alternatively or additionally, a processor can be implemented by a virtual processor or a virtual machine or a soft CPU. A processor can be implemented by a programmable processor having configuration interfaces that facilitate configuration of various techniques described herein. The programmable processor can be configured to implement method steps as described herein, components, modules, or other aspects of the techniques described herein.

A "memory unit" or "memory module" or the like can be implemented by a volatile memory in the form of random access memory (RAM) or a non-volatile memory such as a hard disc or data carrier.

A "module", in the context of the present disclosure, can be implemented by a processor and/or a memory unit for storing program instructions. A module can be implemented in hardware and/or software and/or firmware. For example, the processor can be configured to execute the program instructions such that the processor executes functions that implement methods or steps of a method as described herein. A module can also be a node of a DBS that implements specific functions/features of the respective module. The respective modules can, e.g., be implemented as separate/individual modules. For this, the respective modules can include further elements. For example, these further elements can be one or more interfaces (e.g., database interfaces, communication interfaces - e.g., a network interface or WLAN interface) and/or an evaluation unit (e.g., a processor) and/or a memory unit. By means of the interfaces, it is possible to exchange data (e.g., to receive, communicate, transmit or provide data). By means of an evaluation unit, it is possible to compare, validate, process, assign or calculate data in a computer-implemented and/or automated manner. By means of the memory unit, data can be stored, retrieved or provided in a computer-implemented and/or automated manner. It would also be possible that multiple modules are implemented by a common processor.

The term "include" - specifically with respect to data and/or information - can relate to a (computer-implemented) storing of respective information or the respective date in a data structure/data set (which, e.g., in turn is also stored in a memory unit) in the context of the present disclosure.

The term "assign" - specifically in relation to data and/or information - can relate to a computer-implemented assignment of data and/or information in connection with the present disclosure. For example, a first date is assigned, by means of a memory address or a unique identifier, a second date, e.g., by storing the first date together with the memory address or the unique identifier of the second date in a data set.

The term "providing" - in particular in regard to data and/or information - can relate to a computer-implemented providing in connection with the present disclosure. Said providing may be implemented by an interface, e.g., a database interface, a network interface, an interface to a memory unit. It is possible that respective data and/or information are communicated and/or transmitted and/or retrieved and/or received when providing via the interface.

The term "providing" can also relate to a loading or saving, e.g., of a transaction together with respective data in the context of the present disclosure. For example, this can be implemented on or by a memory module.

The term "providing" can also relate to communicating (or transmitting or receiving or transfer) of respective data from a node to another node of the blockchain or the DBS (respectively of the corresponding infrastructure) in the context of the present disclosure.

A "smart-contract process" can refer to the execution of program code, e.g., of a control instruction, in a process by means of the DBS or the respective infrastructure.

A "checksum", e.g., a data-block checksum, a data checksum, a node checksum, a transaction checksum, a chaining checksum or the like can relate to a cryptographic checksum or a cryptographic hash or hash value, in the context of the present disclosure. Such checksums can, in particular, be determined across a data set and/or data and/or one or more transactions and/or a subsection of a data block, e.g., the block header of a block of the blockchain or the data block header of a data block of a DBS or only a part of the transaction of a data block. A checksum can be specifically implemented by a checksum or checksums or a hash value or hash values of a hash tree, e.g., a Merkle tree, a Patricia tree. Moreover, a "checksum" can also be implemented by a digital signature or a cryptographic message authentication code. By means of checksums, it is possible to implement cryptographic protection/protection against manipulation for transactions and the associated data and datasets on various levels of the DBS. For example, if there is a need for an increased level of security, it would be possible to create and validate checksums on transaction level. For example, if a reduced level of security is required, then it would be possible to create and validate checksums on block level - e.g., across the entire block or only across a part of the data block and/or a part of the transaction.

A "data-block checksum" can relate to a checksum which is calculated across a part or all transactions of a data block in the context of the present disclosure. A node can validate/determine the integrity/authenticity of the respective part of the data block by means of data-block checksums. Alternatively or additionally, the data-block checksum can also be formed across transactions of a preceding data block/predecessor data block. The data-block checksum can, in particular, be implemented by means of a hash tree, e.g., a Merkle tree [1] or a Patricia tree. Here, the data-block checksum can be the root checksum of the Merkle tree of the Patricia tree or of another binary hash tree. It would be possible that transactions are saved by means of further checksums from the Merkle tree or the Patricia tree, respectively, e.g., by using the transaction checksums, wherein in particular the further checksums can relate to leaves of the Merkle tree or the Patricia tree, respectively. The data-block checksum can, thereby, protect the transaction by forming the root checksum from the further checksums. The data-block checksum can, in particular, be calculated for the transactions of a specific data block of the data blocks. In particular, such a data-block checksum can be included in a subsequent data block of the given data block, e.g., to chain this subsequent data block with the preceding data blocks and, in particular to make the integrity of the DBS testable. Thereby, the data-block checksum can implement the chaining checksum or, at least, go into the chaining checksum. The header of a data block (e.g., of a new data block or a data block for which the data-block checksum is determined) can include the data-block checksum.

A "transaction checksum" can relate to a checksum which is determined across a transaction of a data block, in connection with the present disclosure. In addition, the calculation of the data-block checksum of a respective data block can be accelerated, because for this already calculated transactions checksums can be readily used as leaves of a Merkle tree.

A "chaining checksum" in the context of the present disclosure can relate to a checksum which for the respective data block of a DBS indicates or references to a preceding data block of the DBS - which is often referred to as "previous block hash" in literature [1]. For this, in particular, a respective chaining checksum is determined for the preceding data block. The chaining checksum can be implemented, e.g., by a transaction checksum or a data-block checksum of a data block, i.e., of an existing data block of the DBS; to thereby chain a new data block with a (existing) data block of the DBS. For example, it would also be possible that a checksum is determined across a header of the preceding data block or across the entire preceding data block to be used as a chaining checksum. For example, this could also be calculated for multiple or all of the preceding data blocks. For example, the chaining checksum could also be implemented by a checksum determined across the header of a data block in the data-block checksum. A respective data block of the DBS includes, however, preferably a chaining checksum that has been calculated or relates to a preceding data block, specifically, the next-neighbor preceding data block directly adjacent to the respective data block. For example, it would also be possible that a respective chaining checksum is determined only across a part of the respective data block, e.g., the preceding data block. Thereby, a data block can be implemented which has an integrity protected part and a non-protected part. Thereby, a data block can be implemented that has a non-changeable integrity protected part and that has a non-protected part that can be modified later on. Integrity protected can mean that a change of the integrity protected data can be detected by means of a checksum.

Next, example implementations of a transaction are described.

The data - that is, e.g., stored in a transaction of a data block - can be provided in various manners. Instead of data - e.g., user data such as measurement data or data/ownership structure regarding ASICs - a transaction of a data block can rather include the checksum for such data. The respective checksum can be implemented in various manners. For example, a respective data-block checksum of a data block, e.g., including the respective data, of another database or of the DBS, a transaction checksum of a data block of the respective data, e.g., of the DBS or of another database, or a data checksum determined across the data can be used.

In addition, the respective transaction can optionally include a link to or an indication of a memory position - e.g., an address of a file server and indications where the respective data are to be found on the file server; or an address of another DBS which includes the data. The respective data could, e.g., also be provided in a further transaction of a further data block of the DBS - e.g., if the respective data and the associated checksums are included in different data blocks. It would also be possible that those data are provided via another communication channel - e.g., via another database and/or a cryptographically-secured communication channel.

Further, it would be possible that in addition to the checksum an add-on data set - e.g., a link or an indication to a memory position - is provided in the respective transaction. The add-on data set can, in particular, indicate where the data can be retrieved. This can be helpful to limit the amount of data of the blockchain or of the DBS.

The term "security protected" can, specifically, relate to a protection that can be implemented by a cryptographic method. For example, this can be implemented by using a DBS for the providing or communication or transmitting of respective data/transactions. This can be implemented by a combination of the various checksums - e.g., cryptographic - , by appropriate synergetic interaction between the checksums, to, e.g., increase the security or the cryptographic security for the data of the transactions. In other words, "security protected" in the context of the present disclosure can also relate to "cryptographically protected" and/or "protected against manipulation", wherein "protected against manipulation" can also be referred to as "protected integrity".

Insertion of transactions into a DBS can include chaining of data blocks of a DBS. The term "chaining of data blocks of a DBS" in the connection of the present disclosure can relate to the data blocks respectively including information (such as the chaining checksum) which links to another data block or multiple other data blocks of the DBS [1], [4], [5].

Insertion of transactions into a DBS can include saving the transactions in one or more data blocks of the DBS.

The term "insertion of transactions into the DBS" and the like can relate to communicating a transaction or transactions or a data block including the transactions to one or more nodes of a DBS. If those transactions are successfully validated, e.g., by means of the one or more nodes, these transactions can be chained as a new data block with at least one existing data block of the DBS [1], [4], [5]. For this, the respective transactions are stored in a new data block. In particular, this validating and/or chaining can be implemented by a trusted node, e.g., a mining node, a blockchain oracle or a blockchain platform.

Insertion of transactions can include validating and/or confirming transactions.

In particular, a blockchain can relate to a blockchain as a service, such as has been proposed by Microsoft or IBM. In particular, trusted nodes and/or other nodes can deposit a node checksum, e.g., a digital signature, in a data block, e.g., in a data block that has been validated by the respective node and which is then chained, in particular to facilitate identification of the creator of the data block and/or identification of the node. Here, the node checksum indicates which node has chained the respective data block with at least one other data block of the DBS.

A "transaction" or "transactions" in connection with the present disclosure can relate to a smart contract [4], [5], a data structure or a transaction data set, which, in particular, respectively include a transaction or multiple transactions. The term "transaction" or "transactions" can also relate to the data of a transaction of a data block of a blockchain, in connection with the present disclosure. A transaction can, e.g., include a program code which, e.g., implements a smart contract. For example, a transaction can also relate to a control transaction and/or a confirmation transaction in the context of the present disclosure. Alternative, a transaction can also be implemented by a data structure which saves the data (e.g., the control instructions and/or the contract data and/or other data such as video data, user data, measurement data etc.).

In particular, the term "saving transactions in data blocks", "saving transaction" and the like can relate to a direct saving or indirect saving. A direct saving can relate to the respective data block of the DBS or the respective transaction of the DBS including the respective data. An indirect saving can relate to the respective data block or the respective transaction including a checksum and, optionally, an add-on data set, e.g., a link to or an indication of a memory location for respective data; hence, the respective data are not directly saved in the data block (or the transaction). Rather, a checksum is provided for these data in the data block. In particular, these checksums can be validated when saving transactions in data blocks, such as has been explained above with respect to "inserting into the DBS".

A "program code" - such as a smart contract - can relate to a program instruction or multiple program instructions which are saved in one or more transactions, in connection with the present disclosure. The program code can be executable and can be executed, e.g., by the DBS. This can be implemented, e.g., by a runtime environment, e.g., of a virtual machine, wherein the runtime environment or the program code are preferably Turing complete. The program code is preferably executed by the infrastructure of the DBS [4], [5]. Here, a virtual machine is implemented by the infrastructure of the DBS. It is possible to execute the program code when validating a corresponding transaction.

A "smart contract" can relate to an executable program code in connection with the present disclosure [4], [5] - see, in particular, explanations with respect to "program code" provided above. The smart contract is preferably saved in a transaction of the DBS - e.g., a blockchain -, e.g., in a data block of the DBS. For example, the smart contract can be executed in the same manner as has been described in connection with the definition of "program code", in particular in connection with the subject disclosure.

The term "proof of work" can relate to solving a computationally expensive task, in particular, depending on the content of a data block or the content of a specific transaction, in connection with the present disclosure [1], [4], [5]. Such a computationally expensive task can also be referred to as cryptographic puzzle.

The term "DBS", which can also be referred to simply as "distributed database", can generally relate to a decentralized, distributed database, a blockchain, a distributed ledger, a distributed memory system, a distributed ledger technology (DLT) based system (DLTS), a revision secure database system, a cloud, a cloud-service, a blockchain in a cloud or a peer-to-peer database system, in the context of the present disclosure. Also, various implementations of a blockchain or of a DLTS can be used, e.g., such as a blockchain or a DLTS that is implemented by means of a directed acyclic graph (DAG), a cryptographic puzzle, a hash graph or a combination of these variants [6], [7]. It would also be possible to implement different consensus algorithms. For example, a consensus algorithm can be implemented by means of a cryptographic puzzle, a gossip about gossip, a virtual voting or a combination of such techniques (e.g., gossip about gossip combined with virtual voting) [6], [7]. For example, if a blockchain is used, then this can, in particular, be implemented by a bitcoin-based implementation or an Ethereum-based implementation [1], [4], [5]. The term "distributed database" can also relate to a DBS that has at least a part of its nodes and/or devices and/or infrastructure implemented by a cloud. For example, the respective components can be implemented as nodes/devices in the cloud (e.g., as virtual nodes in a virtual machine). This can be implemented by WMware, Amazon web services or Microsoft Azure. Due to the increased flexibility of the described implementation scenarios, it is, in particular, possible to combine partial aspects of the described implementation scenarios with each other, e.g., by using a hash graph as blockchain, wherein the blockchain itself can also be a block batch.

For example, if a directed acyclic graph (DAG) is used (e.g., IOTA or Tangle), transactions or blocks or nodes of the graph are connected with each other via directed edges. I.e., (all) edges are (always) having the same direction, e.g., as observed for time. In other words it is, in particular, not possible to propagate through or visit transactions or blocks or nodes of the graph backwards (i.e., opposite to the common unified direction). Acyclic means, in particular, that there are no loops or ring closures when traversing the graph. For example, a DBS can relate to a public DBS (e.g., a public blockchain) or a closed (private) distributed databased system (e.g., a private blockchain).

For example, in the case of a public DBS, the nodes and/or devices can join the DBS without proof of authorization or authentication or login credentials, respectively be accepted by the DBS without such information. In particular, in such a case the operator of the nodes and/or devices can remain anonymous.

For example, in the case of implementation of the DBS by a closed database system, new nodes and/or devices can require a valid proof of authorization and/or valid authentication information and/or valid credentials and/or valid login information to join the DBS or be accepted by the DBS.

A DBS can also be implemented by a distributed communication system for data exchange. For example, this can be a network or a peer-to-peer network.

The term "data block" - that can be, depending on the context and implementation, also be referred to as "constituent" or "block" - can refer to, in the context of the present disclosure, a data block of a DBS - e.g., a blockchain or a peer-to-peer database -, which are, in particular, implemented as a data structure and, preferably, include one of the transactions or multiple of the transactions. In an implementation, the database or the database system can be a DLT based system (DLTS) or a blockchain and the data block can be a block of the blockchain or of the DLTS.

As a general rule, a data block can, e.g., include indications of the size - e.g., data volume in bytes- of the data block, a data block header (block header), a transaction counter and one or more transactions [1]. The data block header can include a version, a chaining checksum, a data-block checksum, a timestamp, a proof of work, a Nonce - i.e., a unique value, a random value or a counter which is used for the proof of work [1], [4], [5]. A data block can, e.g., also simply relate to a respective memory range or address range of the overall data that is stored in the DBS. Thereby, it is possible to implement blockless DBS such as the IOT chain (ITCA), IOTA, Byteball, etc. Here, the functionality of the blocks of a blockchain and of the transactions are combined with each other in such a manner that, e.g., the transactions themselves secure the sequence or chains of transactions of the DBS, such that they are, in particular, saved in a secured manner. For this the transactions can be chained by means of a chaining checksum, e.g., by using a separate checksum or the transaction checksum of one or more transactions as chaining checksum, which is saved in a new transaction in the DBS when storing the new transaction in the DBS. In such a scenario, a data block can, e.g., also include one or more transactions, wherein in a simple scenario a data block relates to a single transaction.

The term "Nonce" can relate to, in connection with the present disclosure, a cryptographic nonce - which is an abbreviation for "used only once" [2] or "number used once" [3]. In particular, a Nonce indicates individual numbers or a combination of letters that is preferably only used once in the respective context, e.g., transaction, data communication.

The term "preceding data blocks of a (given) data block of the DBS" can relate, in connection with the present disclosure, e.g., to the data block of the DBS that is a direct predecessor of the (given) data block. Alternatively, the term "preceding data blocks of a (given) data block of the DBS" can also relate to all data blocks of the DBS that precede the given data block. Thereby, the chaining checksum or the transaction checksum can be determined across the direct preceding data block (respectively the transactions thereof) or all data blocks preceding the given data block (respectively the respective transactions).

The terms "blockchain node", "node", "node of a DBS" and the like can relate, in the context of the present disclosure, to devices - e.g., mobile devices, wireless communication devices, computers, smartphones, clients or participants - that perform operations associated with the DBS, e.g., a blockchain [1], [4], [5]. Such nodes can, e.g., execute transactions of a DBS or the respective data blocks or can insert new data blocks including new transactions into the DBSs by means of new data blocks. In particular, this validation and/or chaining can be implemented by a trusted node, e.g., a mining node, or exclusively by trusted nodes. A trusted node is a node that has additional security measures - e.g., firewalls, access restrictions to the node or the like - to avoid manipulation of the node. Alternatively or additionally, a trusted node can, e.g., save a node checksum - e.g., a digital signature or a certificate - in the new data block when chaining the new data block with the DBS. Thereby, it is possible to provide the proof that indicates that the respective data block has been inserted by a specific node, respectively indicate the originator.

As a general rule, device or the devices can be implemented by devices of a technical system and/or an industrial plant and/or an automation network and/or a fabrication plant, that can also be nodes of the DBS. Thereby, the devices can be mobile devices or devices of the Internet of things, that can also be nodes of the DBS. Nodes can, e.g., include at least one processor, e.g., to execute their computer-implemented functionality.

The term "blockchain oracle" and the like can relate, in the context of the present disclosure, to nodes, devices or computers that include a security module that has software protection mechanisms - e.g., cryptographic methods - , mechanical protection mechanisms - e.g., a lockable housing - or electric protection measures - e.g., tamper protection or a protection system that deletes data of the security module in the case of unauthorized use/modification of the blockchain oracle. The security module can include, e.g., cryptographic keys that are required for the calculation of checksums - e.g., of transaction checksums or node checksums.

The term "computer" or "device" can relate to a computer (system), a client, a smartphone, a device or a server that are arranged outside of the blockchain, respectively or are not participants of the DBS, e.g., of the blockchain, i.e., do not execute operations of the DBS or simply retrieve those without executing transactions, inserting data blocks or calculate proof of works. Alternatively, the term "computer" or "device" can also relate to a node of the DBS. In other words, a device can in particular implement a node of the DBS or a device outside of the blockchain and the DBS, respectively. A device outside of the DBS can, e.g., access the data - e.g., the transactions or the control transactions - of the DBS. A device outside of the DBS can be controlled by nodes - e.g., by means of smart contracts and/or blockchain oracles. For example, if a control of a device - e.g., a device implemented as a node or a device outside of the DBS - is implemented by a node, then this can occur via a smart contract which, in particular, is saved in a transaction of the DBS.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

- FIG. 1: schematically illustrates a DBS implemented by a blockchain including multiple blocks according to various examples.
- FIG. 2: is a flowchart of a method according to various examples.
- FIG. 3: schematically illustrates a device according to various examples.
- FIG. 4: schematically illustrates prioritizing insertion of a transaction into the DBS in accordance with a timing constraint according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of saving transactions in a DBS are described. Example implementations of the DBS include a blockchain including multiple blocks. A transaction may include data or may be indicative of the data, e.g., by providing a link to the data using add-on information. For example, the transaction may include a checksum of the data.

By saving transactions in the DBS, unauthorized manipulation of the transactions and the associated data may be avoided.

Hereinafter, techniques are described which facilitate tailoring of insertion of the transactions into the DBS. Specifically, techniques are described that facilitate timely and/or reliable insertion of transactions into the DBS. For example, the techniques described herein may facilitate guaranteeing fulfillment of certain quality of service (QoS) levels imposing timing constraints on the insertion of the respective transactions.

Various techniques described herein are based on the finding that sometimes there may be limited computational resources available for the insertion of transactions into the DBS. For example, the insertion of a given transaction into the DBS may require validation of the respective transaction and/or chaining of a block of the DBS including the transaction. Mining tasks may need to be fulfilled, e.g., to obtain a proof-of-work or proof-of-stake. Further, various techniques are based on the finding that such limited computational resources can result in a congestion scenario in which a backlog of unconfirmed transactions queued for the insertion into the DBS is experienced. For example, unconfirmed transactions may be buffered in a buffer queue until computational resources become available or can be scheduled for the insertion of one or more of the unconfirmed transactions. On the other hand, such buffering of unconfirmed transactions may result in less predictable system behavior associated with the insertion of the unconfirmed transactions. For example, a time-to-insertion of a given transaction cannot be easily predicted. Also, this time-to-insertion may vary from transaction to transaction, effectively creating jitter. Further, the time-to-insertion can become significant, thereby effectively creating latency and the insertion of transactions. Transactions may become outdated or a reliability of the DBS may be compromised. According to the various examples described herein, it becomes possible to better manage the insertion of transactions in view of such constraints imposed by limited computational resources.

The techniques described herein can be implemented by a device. The device may be part of an infrastructure of a DBS or may be outside of the infrastructure of the DBS. For example, the device may implement a node of the infrastructure of the DBS. It would also be possible that the device implements a gateway to the infrastructure of the DBS.

According to various examples, and unconfirmed transaction for insertion into a DBS - such as a distributed ledger or a blockchain - can include control information that is indicative of a timing constraint of the insertion of the respective transaction into the DBS.

For example, the timing constraint may be associated with the deadline until which the transaction is to be confirmed, i.e., until which the insertion of the transaction into the DBS is to be completed.

According to various examples, control information that is indicative of the timing constraint can be retrieved from at least some of the unconfirmed transactions. Then, it is possible to prioritize the insertion of one or more transactions over the insertion of one or more further transactions, in accordance with the respective timing constraints.

For example, the one or more transactions prioritized over the one or more further transactions may spend a shorter time in the buffer queue associated with the insertion into the DBS if compared to the one or more further transactions of lower prioritization. For example, instead of a "first in - first out" scheme being applied to the buffer queue management, it would be possible to rearrange a plurality of transactions prior to the insertion of the plurality of transactions in accordance with the timing constraints, to thereby implement prioritizing.

As a general rule, various options are available for implementation of the control information. For example, the control information could include a blockchain timing information such as a sequence number of a block. As a general rule, the control information may be indicative of one or more blocks. Thereby, the timing constraint can correspond to finalizing the insertion of the respective transaction into the DBS before or at the latest at the block having the respective sequence number, or generally before the indicated block.

For example, if the timing constraint indicated for a given transaction by the respective control information cannot be met, then the given transaction may become invalid. According to various examples, invalid transactions may be discarded. Discarding can include deleting a respective given transaction from the pool of unconfirmed transactions, buffered for the insertion into the DBS as candidate transactions. Thus, as a general rule, prioritizing the insertion of a given transaction can also include discarding other transactions upon expiry of the respective timing constraint. By discarding transactions upon expiry of the respective timing constraint, a likelihood for non-discarded transactions to be inserted into the DBS in a timely manner increases.

In one example, the control information can constrain the candidate blocks for insertion of the respective transaction. For example, it would be possible to indicate a range of blocks that are eligible for insertion of the respective transaction. For example, the control information may be indicative of at least one of a lower boundary block of a sequence of blocks and an upper boundary block of the sequence of blocks.

For example, specific sequence numbers of blocks could be explicitly indicated by the control information. For example, the control information could be indicative of at least one of a forbidden block of the sequence of blocks and an allowed block of the sequence of blocks. Then, forbidden blocks may not be eligible candidates for saving the respective unconfirmed transaction when inserting the respective unconfirmed transaction into the DBS; while allowed blocks may be eligible candidates for saving the respective unconfirmed transaction when inserting the respective unconfirmed transaction into the DBS.

As a general rule, various options are available to implement the control information being indicative of one or more blocks. In one example, the control information may include the sequence number of the one or more blocks. In other examples, the control information may also be implicitly indicative of the sequence number of the one or more blocks. The control information may include another unique identification criterion for a given block.

In another example, it would be possible to implement the timing constraint in a global timing reference. For example, the control information can include a timestamp defined in the global timing reference. This can correspond to real-time information included in the control information. For example, the timestamp could specify that the insertion of the respective unconfirmed transaction into the DBS has to be completed by April 19, 2018, 10:51:40 UTC.

Hereinafter, various techniques will be described with respect to an implementation of a DBS using a blockchain. However, as a general rule, it would be possible to implement the respective techniques using other technologies.

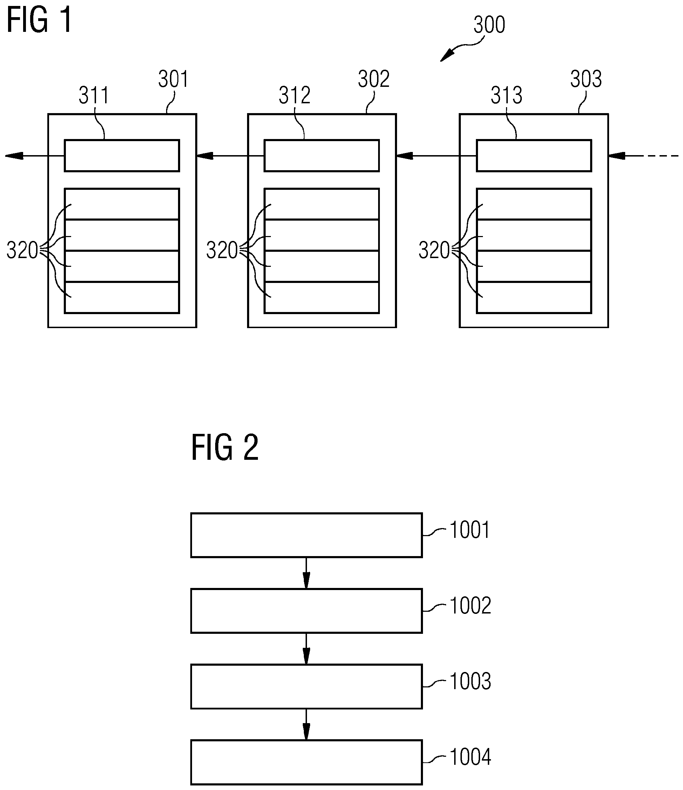

FIG. 1 schematically illustrates aspects with respect to a blockchain 300. The blockchain 300 includes multiple blocks 301-303. Specifically, the blockchain 300 includes a sequence of blocks. Each block 301-303 includes a chaining checksum 311-313, e.g., implemented by a hash value. The checksum 311 - 313 is determined based on a preceding block 301-303 in the sequence: e.g., the checksum 312 of the block 302 is determined based on the block 301 (as illustrated by the respective arrow in FIG. 1). Thereby, modification of the block 301 can be detected by comparing the block 301 with the checksum 312. For example, a block checksum could be use.

Each block 301-303 also includes transactions 320. Each transaction 320 can include respective data or can be indicative of respective data, e.g., by including a respective link or including add-on information or including a respective checksum, etc..

As a general rule, a transaction 320 can be indicative or include program code as a smart contract. For example, the transaction 320 can reference to the program code. For example, the program code can - upon execution as part of validation of the respective transaction 320 - indicate which transactions are allowed/are prohibited. Thereby, various business transactions can be flexibly implemented by a common blockchain infrastructure.

For example, a hash tree can be used, e.g., a Merkle tree or a Patricia tree and the root hash value can be deposited in a respective block 301-303.

A block 301-303 can also include a timestamp, a digital signature, a proof of the work, etc.. The proof of work is the solution to a computationally expensive task that depends on the content of the block and that may be required to be solve when inserting the respective block 301-303 into the blockchain 300; sometimes, such a computationally expensive task is also referred to as cryptographic puzzle. It would also be possible to use other techniques, e.g., a "proof of stake" or a "permissioned ledger" that can be used by authenticated, authorized users.

FIG. 2 is a flowchart of a method according to various examples. The method of FIG. 2 may be computer-implemented on a device, e.g., an infrastructure node of the blockchain 300 or a gateway node for accessing the infrastructure of the blockchain 300.

Initially, at box 1001, a plurality of transactions are received, for the purpose of inserting the transactions into the blockchain. Hence, these transactions can be unconfirmed.

For example, the transactions may be received from a node of industrial automation system. The transactions may be indicative of an operational state of the industrial automation system. Examples of industrial automation systems include: power plants; energy transportation networks, energy distribution networks; railway signaling systems; building automation systems; vehicles such as trains or airplanes; server farms; engines; production lines for manufacturing products; etc..

Next, at box 1002, for one or more of the transactions - received at box 1001 - control information is retrieved. The control information may be embedded in the respective transaction and may, therefore, be retrieved from the respective transaction. The control information may be part of a header of the transaction.

The control information of a given transaction is indicative of a timing constraint of the insertion of the respective transaction into the blockchain. For example, the control information may be explicitly indicative of the timing constraint or may be implicitly indicative of the timing constraint.

Because at least some transactions include the respective control information that is indicative of the respective timing constraint, it becomes possible to vary the timing constraint on a per-transaction bases. Different transactions can be treated differently. Thereby, real-time constraints imposed by the originator of the transactions can be accounted for. For example, if the transactions are received from an industrial automation system, then - e.g., depending on the operational state of the industrial automation system - requirements of the insertion of the transactions may vary as a function of time. By including the in the transactions, such dynamic timing constraints can be accounted for.

Next, at box 1003, at least one of the transactions received at box 1001 can be prioritized over at least one further transaction of the transactions received at box 1001. This prioritization is in accordance with the respective timing constraint of the at least one transaction and/or of the at least one further transaction.

For example, a first transaction having a comparably strict timing constraint can be prioritized over a second transaction having a comparably relaxed timing constraint. Thereby, the urgency of inserting the first transaction into the blockchain can be met - e.g., even in view of limited computational resources available at the blockchain infrastructure nodes for the insertion.

As a general rule, various options are available for implementing prioritization of a first transaction over a second transaction. For example, the second transaction may be received, at box 1001, prior to receiving the first transaction. Therefore, initially, the second transaction may be queued for the insertion into the blockchain prior to the first transaction. When prioritizing the first transaction over the second transaction, this sequence can be re-arranged by queuing the first transaction prior to the second transaction - thereby, effectively overwriting a "first in - first out" principle of queuing the transactions. Alternatively or additionally to such rearrangement of the queuing sequence of unconfirmed transactions in accordance with the timing constraint, another option of implementing the prioritization includes discarding the second transaction. For example, if it is detected that the timing constraint indicated by the control information included in the second transaction cannot be met, then the second transaction can be discarded as invalid - thereby effectively prioritizing insertion of the first transaction which was initially queued behind the second transaction, no discarded.

At optional box 1004, one or more transactions are inserted into the blockchain, in accordance with the prioritization of box 1005. There are various implementations available for box 1004. For example, in one scenario, a transaction may be provided to a blockchain infrastructure node, e.g., upon retrieval from a buffer queue. Then, the transaction may be inserted into the blockchain by another node of the infrastructure of the blockchain. In another scenario, insertion of the transactions into the DBS may be implemented at the same device that also implements boxes 1001-1003.

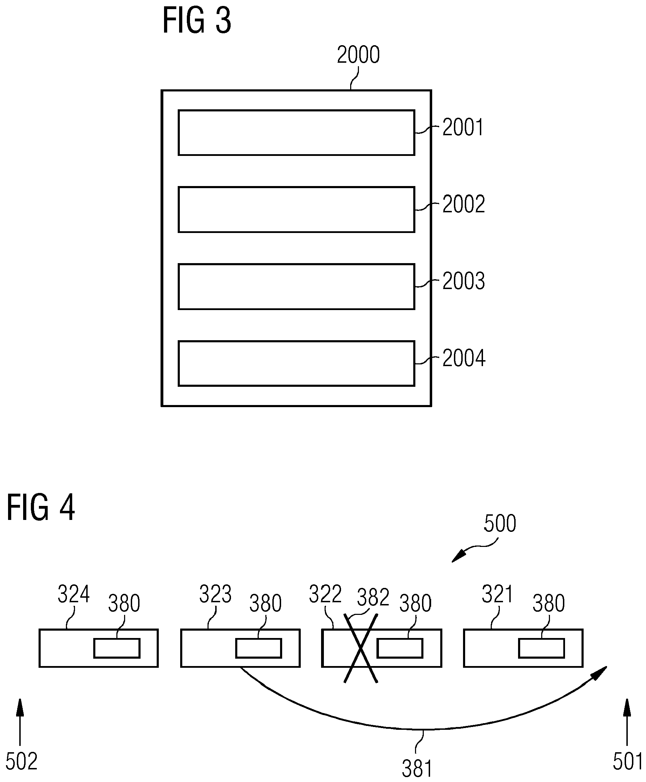

FIG. 3 schematically illustrates a device 2000. For example, the device 2000 may be configured to perform the method according to the example of FIG. 2.

The device 2000 includes a receive module 2001 configured to perform actions associated with box 1001 (cf. FIG. 2).

The device 2000 also includes a retrieve module 2002 configured to perform actions associated with box 1002 (cf. FIG. 2) .

The device 2000 also includes a prioritize module 2003 configured to perform actions associated with box 1003 (cf. FIG. 2) .

The device 2000 also includes an optional insert module 2004 configured to perform actions associated with box 1004 (cf. FIG. 2). In other examples, the insert module may be part of another device, e.g., implementing an infrastructure node of the blockchain.

The various modules of the device 2000 can be implemented in hardware and/or software.

FIG. 4 schematically illustrates aspects with respect to prioritizing the insertion of transactions, in accordance with timing constraints. FIG. 4 schematically illustrates a sequence 500 of transactions 321-324. The transactions 321-324 are yet unconfirmed, i.e., not yet inserted into the blockchain 300.

The sequence 500 of the transactions 321-324 is formed, e.g., by the sequence of receiving the respective transactions 321-324 at the device 2000 (cf. FIG. 3). For example, it would be possible that the transaction 321 is received before any one of the transactions 322-324, that the transaction 322 is received before any one of the transactions 323, 324, and so on. Hence, the sequence 500 may be in order of arrival of the transactions 321-324 from one or more originators of the transactions 321-324.

For example, the sequence 500 of the transaction 321-324 can be saved in a buffer queue. For example, a corresponding buffer module can be configured to save the sequence 500. A corresponding part of a memory unit may be allocated accordingly.

It would be possible that the transaction 321 that is at the top 501 of the sequence 500 is next up for the insertion into the blockchain 300. Further transactions received or sorted into the bottom 502 of the sequence 500.

As illustrated in FIG. 4, each one of the transactions 321-324 includes control information 380. The control information, provided on a per-transaction basis, is indicative of a timing constraint of the insertion of the respective transaction 321-324.

As a general rule, while FIG. 4 schematically illustrates a scenario where each one of the transactions includes the control information 380, in other scenarios it would also be possible that only some of the transactions 321-324 include the control information. Then, for such transactions 321-324 that do not include the control information 380, it may, e.g., be assumed that there is no timing constraint associated with the insertion of the respective transaction 321-324. Alternatively, it would be possible to assume that there is a default timing constraint associated with the insertion of the respective transaction 321-324, i.e., a predefined timing constraint.

As a further general rule, it is possible that some transactions indicate explicitly or implicitly a "best effort" timing constraint. This means that for those transactions, no explicit timing constraint may be defined. Such transactions are handled on a best effort basis when resources are available within the DBS.

As a general rule, various options are available for implementing the control information 380. For example, the control information 380 could be indicative of at least one block 301-303 of the sequence of blocks implemented by the blockchain 300 (cf. FIG. 1). For this, the control information 380 may include a sequence number of the at least one block 301-303. This may be possible, because the sequence number space of the blockchain 300 may be defined a priori, i.e., even before certain blocks having a sequence number within the sequence number space have been created when inserting corresponding transactions into the blockchain 300. For example, the sequence number of the blocks 301-303 can be incremented for each created block. In an alternative scenario, it would also be possible that the control information 380 is indicative of a timestamp which is defined in a global timing reference. Thereby, a deadline for the insertion can be indicated in time domain, rather than in sequence number domain.

The control information 380 may comprise an indication whether the timing constraint - or, specifically, the timestamp - is a hard deadline or a soft deadline. A hard deadline means that if the transaction has to be confirmed by the indicated deadline, and otherwise it is would be discarded. A soft deadline means that the transaction should be confirmed by the indicated deadline, but otherwise it may be confirmed later as well (prioritization).

There may be various options available for implementing the timestamp. For example, the timestamp may be defined in absolute terms within the global timing reference. And an alternative scenario, it would also be possible that the timestamp is defined in relative terms within the global timing reference, e.g., with respect to a certain initialization event. For example, the initialization event could correspond to the creation of the corresponding transaction. Thereby, it is possible to easily define a latency of a time-to-insertion of the corresponding transaction into the blockchain 300.

As a general rule, the timing constraint may define an upper timing constraint and/or a lower timing constraint. For example, the timing constraint may define a range for the insertion of the respective transaction. In this regard, it would be possible that the control information 380 is indicative of a lower boundary block 301-303 and/or is indicative of an upper boundary block 301-303. Thereby, the range can be defined in sequence number domain of the blockchain 300. Alternatively or additionally, it would also be possible to identify individual allowed or forbidden blocks; e.g., the control information 380 could be indicative of at least one of a forbidden block and an allowed block of the sequence of blocks of the blockchain 300.

For example, upon validation of a transaction 321-324 when inserting the respective transaction 321-324 into the blockchain 300, it can be checked whether an indication of one or more blocks 301-303 into the blockchain 300 is consistent with the particular block created to insert the respective transaction 321-324. For example, if the respective transaction 321-324 includes control information 380 that is indicative of one or more block sequence numbers, it can be checked whether the actual block sequence number of the block created to insert the respective transaction 321-324 into the blockchain 300 is consistent with these one or more block sequence numbers.

For example, upon validation of a transaction 321-324 when inserting the respective transaction 321-324 into the blockchain 300, it can be checked whether an indication of a timestamp included in the control information 380 is consistent with timestamp information associated with a block created to save the transaction 321-324 or timestamp information included in that created block. For this, it would be possible that all or at least some of the blocks 301-303 of the blockchain 300 include timestamp information to which the timestamp included in the control information 380 can be compared. The timestamp information included or indicated by a block 301-303 can allow to determine a timing parameter that is associated with that block 301-303 in the global timing reference. The timestamp information can be included in the header of the block 301-303. The timestamp information can be dependent on a point in time or time duration at which or during which the block has been created. Summarizing, techniques have been described which facilitate the prioritized inclusion of unconfirmed transactions in a DBS of validated, confirmed transactions depending on a timestamp information included or indicated by unconfirmed transactions. Blocks of validated, confirmed transactions are created. The timestamp information of transactions confirmed by a block is consistent with the timestamp information of the block.

The control information 380 can then be used to prioritize the unconfirmed transactions 321-324 with respect to each other, for the insertion into the blockchain 300. For example, as illustrated in FIG. 4, this prioritization can include discarding 382, i.e., deleting from the sequence 500. In the example of FIG. 4, the transaction 322 is discarded 382 prior to insertion of the transaction 322 into the blockchain 300. For example, discarding 382 may be upon expiry of the timing constraint indicated by the control information 380 of the transaction 322. On the other hand, by discarding 380 to the transaction 322, the transaction 324 is effectively prioritized - because the insertion of the transaction 324 reaches the top 501 of the sequence 500 earlier than without the discarding 382.

FIG. 4 also illustrates a further example implementation of prioritizing transactions. Specifically, in the example of FIG. 4, the insertion of the transaction 323 is prioritized over the insertion of the transaction 321 by re-arranging 381 the sequence 500. Here, the transaction 323 is initially arranged in-between the transaction 321 and the bottom 502 of the sequence; but is then rearranged to be in-between the top 501 and the transaction 321. This results in earlier insertion of the transaction 323 if compared to the transaction 321 - even though the transaction 323 arrived in the sequence 500 later than the transaction 321.

By such prioritizing, it becomes possible to better meet - at least on average - certain timing constraints associated with the insertion of unconfirmed transactions into the blockchain 300.

Summarizing, techniques have been described which facilitate management of the insertion of transactions into a distributed database systems such as a blockchain. For example, the selection of one or more blocks used for inserting a given transaction into the distributed database system can be controlled based on a timing constraint associated with the given transaction. Transactions that cannot be inserted into the distributed database system in a timely manner can be discarded from the pool of unconfirmed transactions.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

### List of citations

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Vol 21, Nr. 12 Dec. 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles, https://blockchainhub.net/blockchain-oracles/ (retrieved July 12, 2018)

## Claims

1. A device (2000), comprising:
- a receive module (2001) configured to receive a plurality of transactions (320-324) for insertion into a distributed database system (300),
- a retrieve module (2002) configured to retrieve, for at least some transactions (320-324) of the plurality of transactions (320-324), control information (380) from the respective transaction (320-324) that is indicative of a timing constraint of the insertion of the respective transaction (320-324) into the distributed database system (300), and
- a prioritize module (2003) configured to prioritize insertion of at least one transaction (320-324) of the at least some transactions (320-324) into the distributed database system (300) in accordance with the respective timing constraint.

2. The device (2000) of claim 1,
wherein the distributed database system (300) comprises a sequence of blocks (301-303),
wherein the control information (380) is indicative of at least one block (301-303) of the sequence of blocks (301-303) .

3. The device (2000) of claim 2,
wherein the control information (380) is indicative of at least one of a lower boundary block (301-303) of the sequence of blocks (301-303) and an upper boundary block (301-303) of the sequence of blocks (301-303).

4. The device (2000) of claims 2 or 3,
wherein the control information (380) is indicative of at least one of a forbidden block (301-303) of the sequence of blocks (301-303) and an allowed block (301-303) of the sequence of blocks (301-303).

5. The device (2000) of any one of claims 2 - 4,
wherein the control information (380) includes a sequence number of the at least one block (301-303).

6. The device (2000) of any one of the preceding claims,
wherein the control information (380) includes a timestamp defined in a global timing reference.

7. The device (2000) of any one of the preceding claims,
wherein prioritizing the insertion of the at least one transaction (320-324) comprises re-arranging a sequence of the plurality of transactions (320-324) prior to the insertion of the plurality of transactions (320-324) and in accordance with the timing constraints.

8. The device (2000) of any one of the preceding claims,
wherein prioritizing the insertion comprises discarding transactions (320-324) upon expiry of the respective timing constraint.

9. The device (2000) of any one of the preceding claims, further comprising:
- an insert module configured to insert transactions (320) of the plurality of transactions (320) in accordance with said prioritizing.

10. The device (2000) of any one of the preceding claims,
wherein the distributed database system (300) comprises a blockchain, the blockchain comprising a sequence of blocks (301-303) .

11. A method, comprising:
- receiving a plurality of transactions (320-324) for insertion into a distributed database system,
- for at least some transactions of the plurality of transactions: retrieving control information from the respective transaction that is indicative of a timing constraint of the insertion of the respective transaction into the distributed database system,
- prioritizing the insertion of at least one transaction of the at least some transactions into the distributed database system in accordance with the respective timing constraint.

12. The method of claim 11,
wherein the method is performed by the device of any one of claims 1 - 10.

13. A computer program comprising program code that can be executed by at least one processor, wherein the at least one processor, upon executing the program code, is configured to:
- receive a plurality of transactions (320-324) for insertion into a distributed database system,
- for at least some transactions of the plurality of transactions: retrieve control information from the respective transaction that is indicative of a timing constraint of the insertion of the respective transaction into the distributed database system,
- prioritize the insertion of at least one transaction of the at least some transactions into the distributed database system in accordance with the respective timing constraint.

## Amended claims

### Amended claims in accordance with Rule 137(2) EPC.

1. A device (2000), comprising:
- a receive module (2001) configured to receive a plurality of transactions (320-324) for insertion into a distributed database system (300),
- a buffer module to buffer the plurality of transactions (320-324) in a buffer queue until computational resources for the insertion become available or can be scheduled,
- a retrieve module (2002) configured to retrieve, for at least some transactions (320-324) of the plurality of transactions (320-324), control information (380) from the respective transaction (320-324) that is indicative of a timing constraint of the insertion of the respective transaction (320-324) into the distributed database system (300), and
- a prioritize module (2003) configured to prioritize insertion of at least one transaction (320-324) of the at least some transactions (320-324) into the distributed database system (300) in accordance with the respective timing constraint,
wherein prioritizing the insertion of the at least one transaction (320-324) comprises re-arranging a sequence of the plurality of transactions (320-324) in the buffer queue prior to the insertion of the plurality of transactions (320-324) and in accordance with the timing constraints.

2. The device (2000) of claim 1,
wherein the distributed database system (300) comprises a sequence of blocks (301-303),
wherein the control information (380) is indicative of at least one block (301-303) of the sequence of blocks (301-303).

3. The device (2000) of claim 2,
wherein the control information (380) is indicative of at least one of a lower boundary block (301-303) of the sequence of blocks (301-303) and an upper boundary block (301-303) of the sequence of blocks (301-303).

4. The device (2000) of claims 2 or 3,
wherein the control information (380) is indicative of at least one of a forbidden block (301-303) of the sequence of blocks (301-303) and an allowed block (301-303) of the sequence of blocks (301-303).

5. The device (2000) of any one of claims 2 - 4,
wherein the control information (380) includes a sequence number of the at least one block (301-303).

6. The device (2000) of any one of the preceding claims,
wherein the control information (380) includes a timestamp defined in a global timing reference.

7. The device (2000) of any one of the preceding claims,
wherein prioritizing the insertion comprises discarding transactions (320-324) upon expiry of the respective timing constraint.

8. The device (2000) of any one of the preceding claims, further comprising:
- an insert module configured to insert transactions (320) of the plurality of transactions (320) in accordance with said prioritizing.

9. The device (2000) of any one of the preceding claims,
wherein the distributed database system (300) comprises a blockchain, the blockchain comprising a sequence of blocks (301-303).

10. A method, comprising:
- receiving a plurality of transactions (320-324) for insertion into a distributed database system,
- buffering the plurality of transactions (320-324) in a buffer queue until computational resources for the insertion become available or can be scheduled,
- for at least some transactions of the plurality of transactions: retrieving control information from the respective transaction that is indicative of a timing constraint of the insertion of the respective transaction into the distributed database system,
- prioritizing the insertion of at least one transaction of the at least some transactions into the distributed database system in accordance with the respective timing constraint,
wherein prioritizing the insertion of the at least one transaction (320-324) comprises re-arranging a sequence of the plurality of transactions (320-324) in the buffer queue prior to the insertion of the plurality of transactions (320-324) and in accordance with the timing constraints.

11. The method of claim 10,
wherein the method is performed by the device of any one of claims 1 - 9.

12. A computer program comprising program code that can be executed by at least one processor, wherein the at least one processor, upon executing the program code, is configured to:
- receive a plurality of transactions (320-324) for insertion into a distributed database system,
- buffer the plurality of transactions (320-324) in a buffer queue until computational resources for the insertion become available or can be scheduled,
- for at least some transactions of the plurality of transactions: retrieve control information from the respective transaction that is indicative of a timing constraint of the insertion of the respective transaction into the distributed database system,
- prioritize the insertion of at least one transaction of the at least some transactions into the distributed database system in accordance with the respective timing constraint,
wherein prioritizing the insertion of the at least one transaction (320-324) comprises re-arranging a sequence of the plurality of transactions (320-324) in the buffer queue prior to the insertion of the plurality of transactions (320-324) and in accordance with the timing constraints.
